(19) Europäisches Patentamt
European Patent Office
Office européen des brevets

(11) **EP 4 113 393 A2**

(12) **EUROPEAN PATENT APPLICATION**

(43) Date of publication:
**04.01.2023 Bulletin 2023/01**

(21) Application number: **22207758.8**

(22) Date of filing: **16.11.2022**

(51) International Patent Classification (IPC):
**G06N 3/08** *(2006.01)*    **G06N 3/04** *(2006.01)*

(52) Cooperative Patent Classification (CPC):
**G06N 3/0454; G06N 3/0445; G06N 3/08**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.11.2021 US 202117456545**

(71) Applicant: **Baidu USA LLC**
**Sunnyvale, California 94089 (US)**

(72) Inventors:
• **JIANG, Shu**
  **Sunnyvale, 94089 (US)**
• **XIONG, Zikang**
  **Sunnyvale, 94089 (US)**
• **LIN, Weiman**
  **Sunnyvale, 94089 (US)**
• **CAO, Yu**
  **Sunnyvale, 94089 (US)**
• **LUO, Qi**
  **Sunnyvale, 94089 (US)**
• **HU, Jiangtao**
  **Sunnyvale, 94089 (US)**
• **MIAO, Jinghao**
  **Sunnyvale, 94089 (US)**

(74) Representative: **Maiwald GmbH**
**Elisenhof**
**Elisenstraße 3**
**80335 München (DE)**

(54) **LEARNING-BASED CRITIC FOR TUNING A MOTION PLANNER OF AUTONOMOUS DRIVING VEHICLE**

(57) Described herein are a method of training a learning-based critic for tuning a rule-based motion planner of an autonomous driving vehicle, a method of tuning a motion planner using an automatic tuning framework that with the learning-based critic. The method includes receiving training data that incudes human driving trajectories and random trajectories derived from the human driving trajectories; training a learning-based critic using the training data; identifying a set of discrepant trajectories by comparing a first set of trajectories, and a second set of trajectories; and refining, at the neural network training platform, the learning-based critic based on the set of discrepant trajectories.

FIG. 1

**Description**

TECHNICAL FIELD

Embodiments of the present disclosure relate generally to operating autonomous vehicles. More particularly, embodiments of the disclosure relate to parameter tuning of a motion planner of an autonomous driving vehicle.

BACKGROUND

An autonomous driving vehicle (ADV), when driving in an automatic mode, can relieve occupants, especially the driver, from some driving-related responsibilities. When operating in an autonomous mode, the vehicle can navigate to various locations using onboard sensors, allowing the vehicle to travel with minimal human interaction or in some cases without any passengers.

Motion planning, also referred to as path planning, is key in large-scale, safety-critical, real-world autonomous driving vehicles. A motion planner can be ruled-based or learning-based. Each type of motion planners has its pros and cons. For example, a ruled-based motion planner formulates motion planning as constrained optimization problems. Although the ruled-based motion planner is reliable and interpretable, its performance heavily depends on how well the optimization problems are formulated with parameters. These parameters are designed for various purposes, such as modeling different scenarios, balancing the weights of each individual objective, and thus require manual fine-tuning for optimal performance. On the other hand, a learning-based planner learns from the massive amount of human demonstrations to create human-like driving plans, thus avoiding the tedious design process of rules and constraints. However, the lack of interpretability hinders its application on safety-critical tasks such as autonomous driving.

SUMMARY

In a first aspect, there is provided a computer-implemented method of training a learning-based critic for tuning a motion planner of an autonomous driving vehicle (ADV), the method including:

receiving, by an automatic driving simulation platform, training data that incudes human driving trajectories and random trajectories derived from the human driving trajectories;

training, by the automatic driving simulation platform, a learning-based critic using the training data;

identifying, by the learning-based critic running at the automatic driving simulation platform, a set of discrepant trajectories by comparing a first set of trajectories, and a second set of trajectories, wherein the first set trajectories are generated by a motion planner with a first set of parameters, and the second set of trajectories are generated by the motion planner with a second of parameters; and

refining, by the neural network training platform, the learning-based critic based on the set of discrepant trajectories.

In a second aspect, there is provided a non-transitory machine-readable medium having instructions stored therein, which when executed by a processor, cause the processor to perform operations of the method described in the first aspect.

In a third aspect, there is provided an automatic driving simulation platform, which is configured to perform the method described in the first aspect.

With the preset disclosure, the automatic tuning framework can remove human efforts in tedious parameter tuning, reduce tuning time, while retaining the physical and safety constraints of the ruled-based motion planner. Further, the automatic tuning framework can create personalized motion planners when the learning-based critic is trained using different human driving datasets.

BRIEF DESCRIPTION OF THE DRAWINGS

Embodiments of the disclosure are illustrated by way of example and not limitation in the figures of the accompanying drawings in which like references indicate similar elements.

Figure 1 illustrates a motion planner tuning framework 100 according to one embodiment.

Figures 2A, 2B, and 2C illustrate how additional trajectories are generated from demonstration trajectories according to one embodiment.

Figure 3 illustrates input features for the learning-based critic according to one embodiment.

Figures 4A, 4B and 4C illustrate a loss function for training the learning-based critic according to one embodiment.

Figures 5A and 5B illustrate an architectural design of the learning-based critic according to an embodiment.

Figure 6 illustrates an example of an autonomous driving simulation platform for some embodiments of the invention.

Figure 7 is a flow chart illustrating a process of training a learning-based critic for tuning a motion planner of an ADV according to one embodiment.

Figure 8 a flow chart illustrating a process of tuning a motion planner of an ADV according to one embodiment.

Figure 9 is a block diagram illustrating an ADV according to one embodiment

Figure 10 is a block diagram illustrating a control system of the ADV according to one embodiment

Figure 11 is a block diagram illustrating an example of the autonomous driving system of the ADV according to one embodiment.

DETAILED DESCRIPTION

Various embodiments and aspects of the disclosures will be described with reference to details discussed below, and the accompanying drawings will illustrate the various embodiments. The following description and drawings are illustrative of the disclosure and are not to be construed as limiting the disclosure. Numerous specific details are described to provide a thorough understanding of various embodiments of the present disclosure. However, in certain instances, well-known or conventional details are not described in order to provide a concise discussion of embodiments of the present disclosures.

Reference in the specification to "one embodiment" or "an embodiment" means that a particular feature, structure, or characteristic described in conjunction with the embodiment can be included in at least one embodiment of the disclosure. The appearances of the phrase "in one embodiment" in various places in the specification do not necessarily all refer to the same embodiment.

As described above, ruled-based motion planners have many advantages, but requires manual tuning, which typically is inefficient, and highly depends on empirical knowledge. A motion planner in this disclosure can be a speed planner or a planning module of an ADV. In this disclosure, some of the embodiments are illustrated using trajectories, and some of the embodiments are illustrated using speed plans. Embodiments illustrated using trajectories can be similarly illustrated using speed plans, or vice versa.

According to various embodiments, described herein is an automatic tuning framework for tuning a motion planner of an ADV, and methods of training a learning-based critic, which is a key component of the automatic tuning framework.

In an embodiment, a method of training a learning-based critic includes receiving, at an automatic driving simulation platform, training data that incudes human driving trajectories and random trajectories derived from the human driving trajectories; training by the automatic driving simulation platform a learning-based critic using the training data. The method further includes identifying, by the learning-based critic running at the automatic driving simulation platform, a set of discrepant trajectories by comparing a first set of trajectories, and a second set of trajectories. The first set trajectories are generated by a motion planner with a first set of parameters, and the second set of trajectories are generated by the motion planner with a second of parameters. The method further incudes refining, by the automatic driving simulation platform the learning-based critic based on the set of discrepant trajectories.

In an embodiment, the automatic driving simulation platform include hardware components and services for training neural networks, simulating an ADV, and tuning the parameters of each module of the ADV. The motion planner is one of the module of the ADV, which is represented by a dynamic model in the automatic driving simulation platform. The motion planner can be a planning module, a speed planning module, or a combined module of the planning module and the spend planning module.

In one embodiment, the first set of parameters of the motion planner are identified by the learning-based critic for one or more driving environments, and the second set of parameters are a set of existing parameters for the motion planner. Each of the random trajectories is derived from one of the human driving trajectories. The deriving of the random trajectory from the corresponding human driving trajectory comprises determining a starting point and an ending point of corresponding human driving trajectory, varying one of one or more parameters of the corresponding human driving trajectory, and replacing a corresponding parameter of the human driving trajectory with the varied parameter to get the random trajectory. The parameter can be varied by giving the parameter a different value selected from a predetermined range.

In one embodiment, the learning-based critic includes an encoder and a similarity network, and each of the encoder and the similarity network is a neural network model. Each of the encoder and the similarity network is one of a recurrent neural network (RNN) or multi-layer perceptron (MLP) network. In one embodiment, the encoder is a RNN network, with each RNN cell being a gated recurrent unit (GRU).

In one embodiment, features extracted the training data include speed features, path features, and obstacle features, and each feature is associated with a goal feature, and the goal feature is a map scenario related feature. These extracted features can be used for training the learning-based critic.

In one embodiment, the trained encoder can be trained using the human driving trajectories, encodes speed features, path features, obstacle features, and associated goal features, and generates an embedding with trajectories that are different from the human driving trajectories. The similarity network is trained using the human driving trajectories and the random trajectories, and is to generate a score reflecting a difference between a trajectory generated by the motion planner and a corresponding trajectory from the embedding.

In one embodiment, the loss function used to train the learning-based critic can include an element for measuring similarity between trajectories, which speeds up the training process of the learning-based critic.

In another embodiment, described herein is a method of tuning a motion planner of an autonomous driving vehicle (ADV). The method includes building an objective function from a learning-based critic; and applying an optimization operation to optimize the objective function to determine a set of optimal parameters for a motion planner of a dynamic model of an autonomous driving vehicle (ADV) for one or more driving environments. The method further includes generating a first set of trajectories using the motion planner with the set of optimal parameters for the one or more driving environments; generating a second set of trajectories using the learning-based critic with a set of existing parameters for the one or more driving environment; and generating a score indicating a difference between the first set of trajectories and the second set of trajectories.

In one embodiment, the method further includes identifying a set of discrepant trajectories by comparing a first set of trajectories and a second set of trajectories; and refining the learning-based critic based on the set of discrepant trajectories.

In one embodiment, the above operations can be repeated in a closed loop until the score reaches a predetermined threshold.

The automatic tuning framework can be deployed to an automatic driving simulation platform, and can include a learning-based critic that serves as a customizable motion planner metric. The learning-base critic can extract a latent space embedding of human driving trajectories based on the driving environment, and can measure the similarity between a motion-planner generated trajectories and a pseudo human driving plan. Thus, using the learning-based critic, the automatic tuning framework can automatically guide a ruled-based motion planner to generate human-like driving trajectories by choosing a set of optimal parameters.

In one embodiment, in the automatic driving simulation platform, the motion planner can be a planning module or a speed module of a dynamic model of an ADV. The motion planner is parameterized and thus highly configurable. The automatic tuning framework can use the Bayesian parameter searching method or a sequential model-based algorithm configuration to speed up the parameter tuning process.

In one embodiment, the learning-based critic acts as the objective function that describes the costs of various parameters of a motion planner. Thus, by optimizing the learning-based critic, the automatic tuning framework can identify a set of optimal parameters to optimize the parameters of the motion planner.

In one embodiment, the learning-based critic is trained using an inverse reinforcement learning (IRL) method, and can quantitatively measure trajectories based on human driving data. With this learning-based critic, the automatic tuning framework, which also includes simulation-based evaluation, can enable a ruled-based motion planner to achieve human-like motion planning.

Compared to existing tuning frameworks, the automatic tuning framework can remove human efforts in tedious parameter tuning, reduce tuning time, and make the deployment of the motion planner more scalable. Further, the physical and safety constraints in the rule-based motion planner are retained, which maintains reliability. In addition, when trained with different human driving datasets, the learning-based critic can extract different driving styles, which can be further reflected in motion planners tuned by the automatic tuning framework to create different personalized motion planners.

The embodiments described above are not exhaustive of all aspects of the present invention. It is contemplated that the invention includes all embodiments that can be practiced from all suitable combinations of the various embodiments summarized above, and also those disclosed below.

Motion Planner Tuning Framework

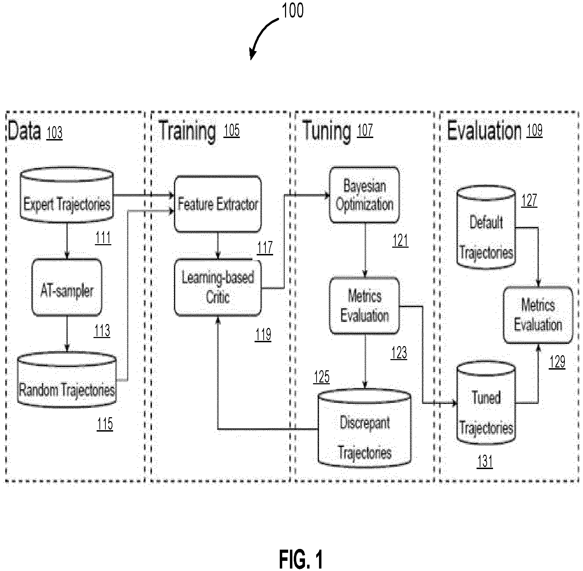

Figure 1 illustrates a motion planner tuning framework 100 according to one embodiment. The motion planner framework includes a data phase 103, a training phase 105, a tuning phrase 107, and an evaluation phase 109, each phase including a number of software and/or hardware components that complete a set of operations for performing a number of functions.

In the data phase 103, expert trajectories 111 are collected, from which random trajectories 115 are generated using an acceleration-time sampler (AT-sampler) 113. The expert trajectories 111 are human driving trajectories generated by one or more ADVs that are manually driven by human beings, e.g., hired professional drivers.

The expert trajectories 111, also referred as demonstration trajectories, can be contained in a record file recorded by the ADV while it is being manually driven. Each expert trajectory can include points that the ADV is expected to pass, and several driving parameters of the ADV, such as heading, speed, jerks, and acceleration of the ADV at each point.

In one embody, the AT-sampler 113 can be a software component used to generate additional trajectories to increase the size of the training dataset. Since the expert trajectories 111 are collected by vehicles that are manually driven by human beings, they are limited by available resources, e.g., the number of professional drivers that can be hired. The AT-sampler 113 can generate additional trajectories from the expert trajectories 111.

The random trajectories 115 are the additional trajectories generated by the AT-sampler 113. From each expert trajectory, i.e., human driving trajectory, the AT-sampler 113 can generate many other trajectories (e.g., 1000 trajectories), each generated trajectory having the same starting point and destination point as the original expert trajectory, but having one or more different points in the middle, and/or having variations in one or more of the driving parameters of the ADV on each point on the expert/demonstration trajectory.

As an illustrative example, an expert trajectory starts with point A, ends with Z, and passes points B, C, E, F, and G, with accelerations of 0.1m/s$^2$, 0.5m/s$^2$, 0.9 m/s$^2$, 0.2 m/s$^2$, and 0.7m/s$^2$ at each point respectively. From this expert trajectory, the AT-sampler 113 can use different accelerations at one or more of the points B, C, E, E, F, and G to generate different trajectories. The different accelerations can be selected from the range between 0.1m/s$^2$ and 0.9 m/s$^2$. The AT-sampler 113 can sample different accelerations from the range and use them to generate different trajectories.

In one embodiment, to avoid generating unrealistic samples and to reduce the sample space, the AT-sampler 113 can infer speed and jerk parameters from the acceleration parameters.

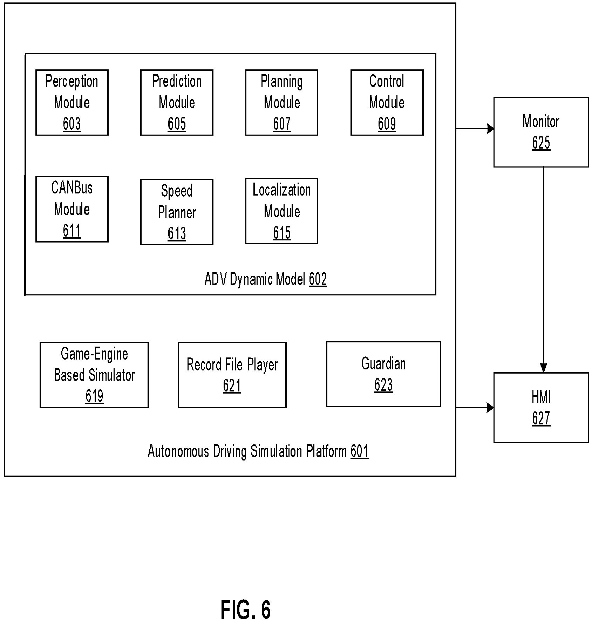

In the training phase 105, a feature extractor 117 can extract features from the demonstration trajectories 111 and the generated trajectories 115. The feature extractor 117 can be part of an automatic driving simulation platform that will be described in details in Figure 6. The extracted features can be used to train a learning-based critic 119. Examples of the extracted features can include speed, acceleration, jerk, and heading of an ADV each point on a trajectory.

In one embodiment, the demonstration trajectories 111 and the generated trajectories 115 are associated, and this corresponding relationship can be considered during the training of the learning-based critic 119. For example, only when a generated trajectory has a single association with one demonstration trajectory can the loss of that generated trajectory be computed. In one embodiment, the inverse reinforcement learning (IRL) is used to train the learning-based critic. The IRL is a training algorithm for learning the objectives, values, or rewards of an agent (i.e. the learning-based critic 119) by observing its behavior.

In the tuning phase 107, a Bayesian optimization operation 121 is performed by the automatic driving simulation platform to tune a motion planner of an ADV by optimizing an objective function built from the learning-based critic 119.

For example, if $\theta$ denotes a parameterized deterministic policy, which is a mapping from a set of environment configurations sequence C to an ego vehicle's configuration sequence $\hat{C}$. Thus, $\theta$ can denote a motion planner or a speed planner. The mapping is fixed when parameters of the motion planner or the speed planner are fixed. Further, let's assume that $f_{critic}$ denotes a cost that a learning-based critic generates to measure the quality of speed plans or trajectories generated by a speed planner or the motion planner with respect to the configurations C. Then, an objective function can be built from the learning-based critic:

$$\Phi^* = \arg\min_{\Phi} F_{\text{critic}}(\theta_{\Phi}^{sp}, \mathcal{C})$$

In the above objective function, $\theta_{\Phi}^{sp}$ denotes a speed planner, $C$ is a set of predicted environment configurations generated in various scenarios, and $F_{critic}$ is a composition of costs, each being a $f_{critic}$ for a different speed plan of a range of speed plans generated by a speed planner. Multiple speed plans are used in order to accurately reflect the performance of the speed planner, because a single speed plan may fail to reflect the motion planner's performance in different scenarios. The automatic driving simulation platform can use the Bayesian optimization operation 121 to identify a set of parameters for the speed planner that would minimize the total cost $F_{critic}$. That set of parameters would be the optimal parameters for the speed planner. Thus, the automatic driving simulation platform tunes the speed planner by identifying a set of parameters that would minimize the total cost of a range of speed plans generated by the speed planner.

In one embodiment, the tuning process of the speed planner can start by generating a first set of speed plans using the speed planner with a first set of parameters. Each generated speed plans can be provided as input to the learning-based critic, which can generate a score indicating how close the generated speed plan is to a human driving speed plan. The closer, the lower the score. A total score for the first set of speed plans can be calculated to get a first total score.

Then, a second set of parameters is selected for the speed planner, which generates a second set of speed plans. For the second set of speed plans, the learning-based critic can be generated a second total score. The process can continue until a total score that meets a predetermined threshold is find or a predetermined number of iterations is reached.

The above description uses the tuning of the speed planner as an example to illustrate how the parameters of the speed planner is tuned. The motion planner can be similarly tuned as described above.

In the tuning phase 107, some discrepant trajectories 125 can be identified. The discrepant trajectories 125 are corner cases in which the motion planner performs as expected but the learning-based critic 119 reports high costs, or vice versa. These corner cases exist because it is difficult to collect data for some rare scenarios. Thus, the learning-based critic 119 may have been trained without using data for the rare scenario. When such a rare scenario is encountered during the tuning phase, the learning-based critic 119 is unlikely to report an accurate cost. These corner cases can be high-cost good behavior cases or low-cost bad behavior cases. The automatic driving simulation platform, while tuning the parameters of the motion planner, can collect the corner cases, and add them to the training data set for refining the learning-based critic 119.

In the evaluation phase 109, the tuned motion planner can be deployed to an autonomous driving simulation platform. Default trajectories 127 and tuned trajectories 131 can be compared in terms of the evaluation metrics 129, which can be the same set of evaluation metrics as the evaluation metrics 123. The default trajectories 127 are generated by the motion planner before it is tuned. The autonomous driving simulation platform can use the same record file to recreate virtual environments for generating both the default trajectories 127 and the tuned trajectories 131. Results of the comparison between the default trajectories 127 and the tuned trajectories 131 can be used to refine the learning-based critic 119 and the evaluation metrics 123 and 129.

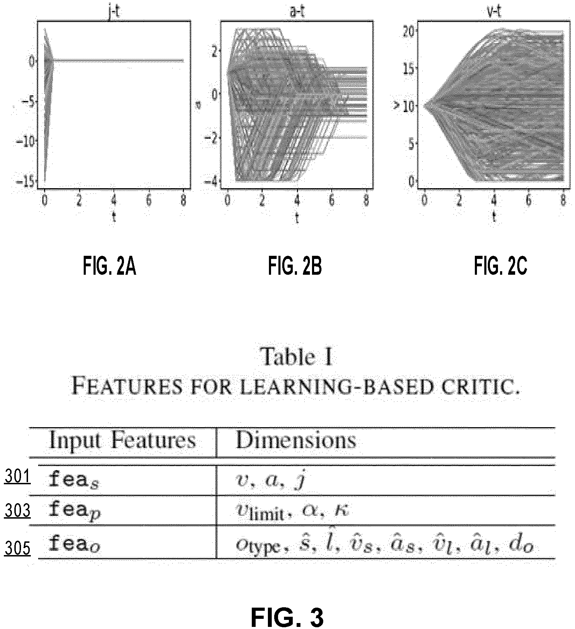

Figures 2A, 2B, and 2C illustrate how additional trajectories are generated from demonstration trajectories according to one embodiment. Figure 2B shows an example acceleration-time space, which includes a range of accelerations against time. An AT-sampler such as the one 113 described in Figure 1 can sample the acceleration-time space and use the sampled accelerations to generate jerk features as shown in Figure 2A, and speed features as shown in Figure 2C. Various combinations of accelerations, jerks and speeds can be used to generate additional trajectories corresponding to each demonstration trajectory.

Figure 3 illustrates input features for the learning-based critic according to one embodiment. As shown in Figure 3, the input features for the learning-based critic include speed-related features 301, path-related features 303, and obstacle-related features 305. The speed features 301 can include speed, acceleration, and jerk. The path-related features 303 can include speed limit, heading angle, and curvature. The obstacle-related features can include features in six relative directions to the ego car; the fix directions are left-front, front, right-front, left-rear, rear, and right-rear. Examples of the obstacle-related features can include obstacle type, relative position, speed, acceleration in Frenet Frames and Euclidean distance to the ego vehicle. Each of the above features can be associated with one of a map scenario related metrics for a trajectory.

In one embodiment, all the above features can be extracted from record files recorded by various ADVs manually driven by human drivers, e.g., hired professional drivers.

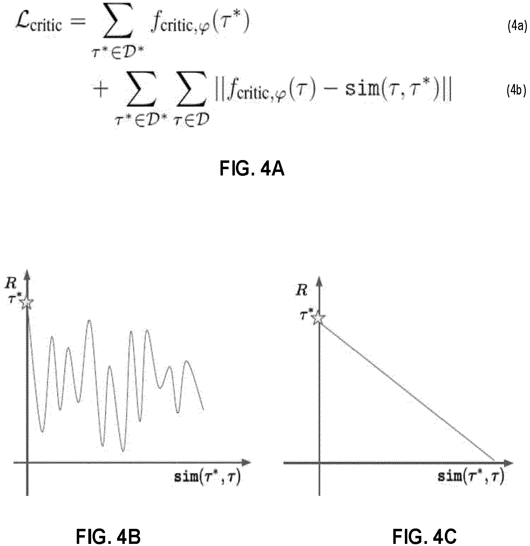

Figures 4A, 4B and 4C illustrate a loss function for training the learning-based critic according to one embodiment.

In one embodiment, the learning-based critic can be trained using the inverse reinforcement learning (IRL) with human driving data and tweaked human driving data. An AT-sampler can tweak the human driving data to derive additional data to increase the size of the training dataset.

The purpose of the IRL is to minimize or maximize a parameterized objective function. When the objective function is to be minimized, it can be parameterized as a cost function, loss function, or error function. When the objective function is to be maximized, it can be parameterized as a reward function.

Figure 4A illustrates a loss function for training the parameterized learning-based critic according to one embodiment. As shown in Figure 4A, the loss function $\mathcal{L}_{critic}$ is to be minimized such that the parameterized critic $f_{critic,\, \varphi}$ can be optimized and thus considered as being trained. A parameterized critic is a critic that is represented in terms of parameters.

In the loss function $\mathcal{L}_{critic}$, $\tau$ is a trajectory in the training dataset D, and $\tau^*$ is a trajectory in the demonstration trajectories $D^*$. As shown, the loss function $\mathcal{L}_{critic}$ includes two parts 4a and 4b. Part 4a represents the cost of human driving trajectories, and thus minimizing part 4a would decrease the cost of the human driving trajectories. To avoid $f_{critic,\, \varphi}\ (\tau^*)$ decreasing too much, $f_{critic,\, \varphi}\ (\tau^*)$ is limited to values that are greater than 0. Minimizing part 4b means regression $f_{critic,\, \varphi}\ (\tau)$ with $sim(\tau,\ \tau^*)$. The term $sim(\tau,\ \tau^*)$ signifies similarity of a trajectory to a human driving trajectory. Thus, the loss function $\mathcal{L}_{critic}$ both minimizes the cost of the human driving trajectories and regresses on the similarity of a trajectory to a corresponding human driving trajectory.

The benefits of using the above loss function to train the learning-based critic are shown by Figures 4B and 4C, where the y-axis represents reward, and the x-axis $sim(\tau,\ \tau^*)$ signifies the similarity of a trajectory to one optimal trajectory $\tau^*$.

Figure 4B shows the training using the traditional max-entropy IRL that does not consider the trajectory similarity, and Figure 4C shows the training using regression on the trajectory similarity property.

In one embodiment, the similarity between two trajectories can be defined with $L_1$ distance between the normalized speed features of the two trajectories. The $L_1$ distance is also called Manhattan distance, and is a sum of absolute distances between measures in all dimensions (e.g., speed, acceleration, jerk).

As shown in Figure 4B and 4C, when $sim(\tau,\ \tau^*)$ is 0, meaning when there are no difference between a trajectory and a human driving trajectory, the reward R is maximized in both Figure 4B and 4C.

However, in Figure 4B, the entropy of all the possible trajectories is to be maximized without considering similarity between any trajectories. Thus, the reward function in Figure 4B has many local optimals, which make optimization more difficult, compared to Figure 4C, where the reward function does not have any local optimal.

When a trajectory is more similar to the human driving trajectory, a higher reward can be expected. In Figure 4C, a quantitative measure is given for the similarity of a trajectory to a human driving trajectory, which further benefits the optimization.

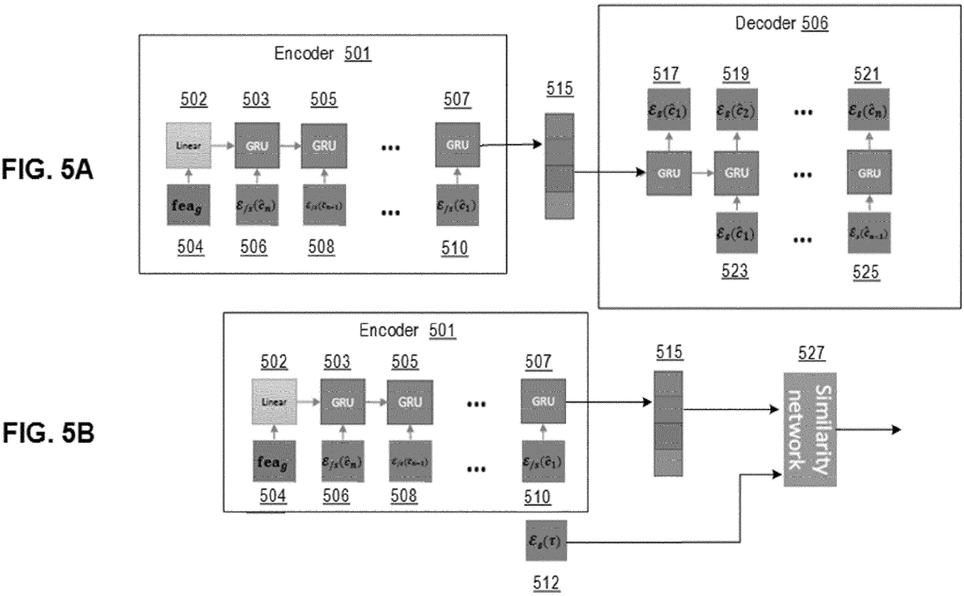

Figures 5A and 5B illustrate an architectural design of the learning-based critic according to an embodiment. Figure 5A shows a training process of an encoder 501. The encoder 501 and a decoder 506 are trained together using human driving trajectories.

During the training process of the encoder 501, the encoder 501 encodes the environment features $fea_s(\hat{c})$ and goal feature $fea_g$ into an embedding 515. The environment features include all the input features (except speed features) described above for the training of the learning-based critic as described in Figure 3. When the input features are encoded into the embedding 515, they have less dimensions. Such dimension compression can speed up the training and inference of the learning-based critic. Then, the decoder 506 can recover speed features from the embedding layer 515 based on the environment features as part of the process of training the encoder 501.

The embedding 515 is a neural network layer with a relatively low-dimension space, which can make machine learning easier on large inputs like sparse vectors.

In one embodiment, the encoder-decoder model used to train the encoder 501 above is a gated recurrent unit (GRU)-Encoder-Decoder (GRU-ED) model. Both the encoder 501 and the decoder 506 can be a recurrent neural network.

In Figure 5A, each of the RNN cells 503, 505, and 507 is a GRU that has two inputs, a hidden state and an input state. Trajectories 506, 508 and 510 are fed into the encoder 501 in sequence. In addition, goal features $fea_g$ 504 are passed to a linear layer 502, and mapped to an initial hidden state of the linear layer 502. As shown, the input sequence of the encoder 501 is in a reversed order, which makes the embedding 515 focus on features in the nearest time slot.

Figure 5B shows an example of the learning-based critic, which includes the encoder 501, the embedding layer 517, and a similarity network 527. During inference, the pre-trained encoder 501 can generate the demonstration embedding 515, from which trajectories and/speed plans can be recovered given a particular environment. These trajectories and/or speed features may not raw trajectories and/or speed plans recorded by a record files. Rather, they are trajectories and/or speed plans inferred by the learning-based critic based on its training.

The inferred trajectories and/or speed plans can be fed into the similarity network 527, together with trajectories and/speed plans generated by a motion planner to be evaluated by the learning-based critic.

The similarity network 527 can be a multi-layer perceptron (MLP) model or a RNN model, and can be trained using the dataset that includes both human driving trajectories and random trajectories generated by the AT-sampler. The trained similarity network 527 can be used to measure similarity between a demonstration trajectory from the embedding layer 515 and a trajectory 512 generated by a motion planner.

Figure 6 illustrates an example of an autonomous driving simulation platform for some embodiments of the invention. The safety and reliability of an ADV are guaranteed by massive functional and performance tests, which are expensive and time consuming if these tests were conducted using physical vehicles on roads. A simulation platform 601 shown in this figure can be used to perform these tasks less costly and more efficiently.

In one embodiment, the example simulation platform 601 includes a dynamic model 602 of an ADV, a game-engine based simulator 619 and a record file player 621. The game-engine based simulator 619 can provide a 3D virtual world where sensors can perceive and provide precise ground truth data for every piece of an environment. The record file player 621 can replay record files recorded in the real world for use in testing the functions and performance of various modules of the dynamic model 602.

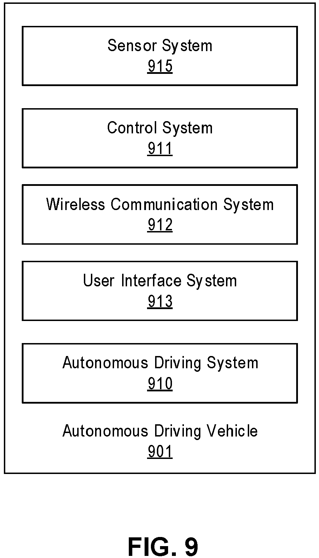

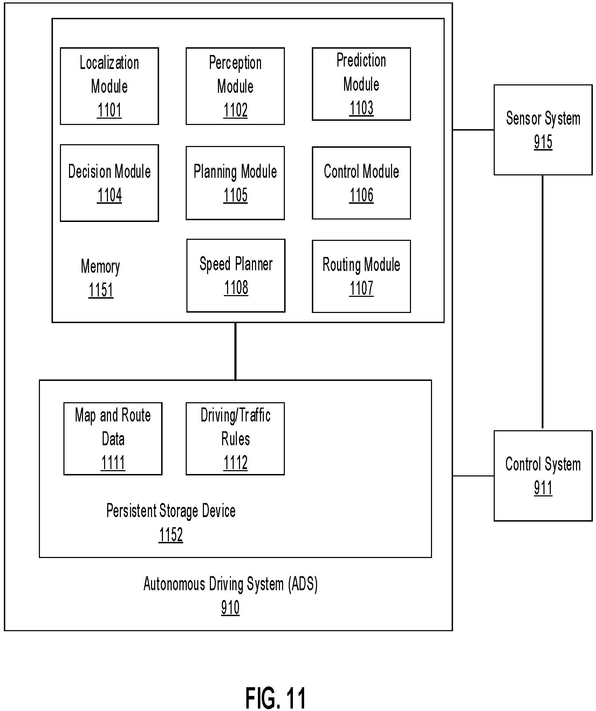

In one embodiment, the ADV dynamic model 602 can be a virtual vehicle that includes a number of core software modules, including a perception module 605, a prediction module 605, a planning module 609, a control module 609, a speed planner module 613, a CAN Bus module 611, a speed planner module 613, and a localization module 615. The functions of these modules are described in detail in Figures 9 and 11.

As further shown, the simulation platform 601 can include a guardian module 623, which is a safety module that performs the function of an action center and intervenes when a monitor 625 detects a failure. When all modules work as expected, the guardian module 623 allows the flow of control to work normally. When a crash in one of the modules is detected by the monitor 625, the guardian module 623 can prevent control signals from reaching the CAN Bus 611 and can bring the ADV dynamic model 602 to a stop.

The simulation platform 601 can include a human machine interface (HMI) 627, which is a module for viewing the status of the dynamic model 602, and controlling the dynamic model 602 in real time.

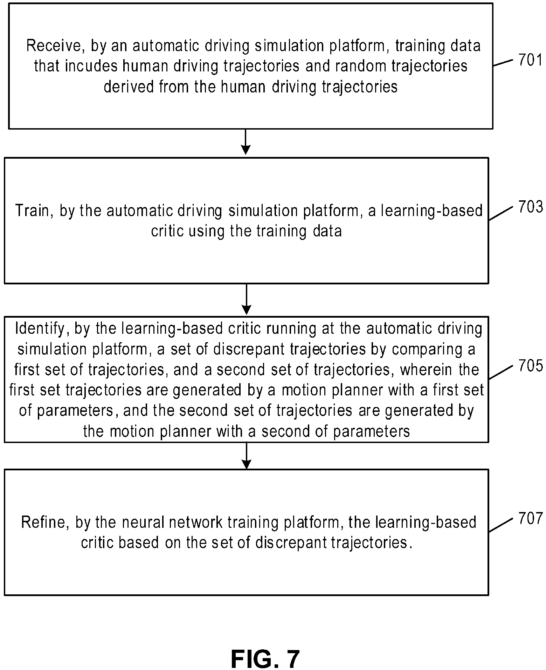

Figure 7 is a flow chart illustrating a process of training a learning-based critic for tuning a motion planner of an ADV according to one embodiment. The process may be performed by processing logic which may include software, hardware, or a combination thereof. For example, the process may be performed by various components and services in the autonomous simulation platform described in Figure 6.

Referring to Figure 7, in operation 701, the processing logic receives training data that incudes human driving trajectories and random trajectories derived from the human driving trajectories. In operation 703, the processing logic trains a learning-based critic using the training data. In operation 705, the processing logic identifies a set of discrepant trajectories by comparing a first set of trajectories, and a second set of trajectories. The first set trajectories are generated by a motion planner with a first set of parameters, and the second set of trajectories are generated by the motion planner with a second of parameters. In operation 707, the processing logic refines the learning-based critic based on the set of discrepant trajectories.

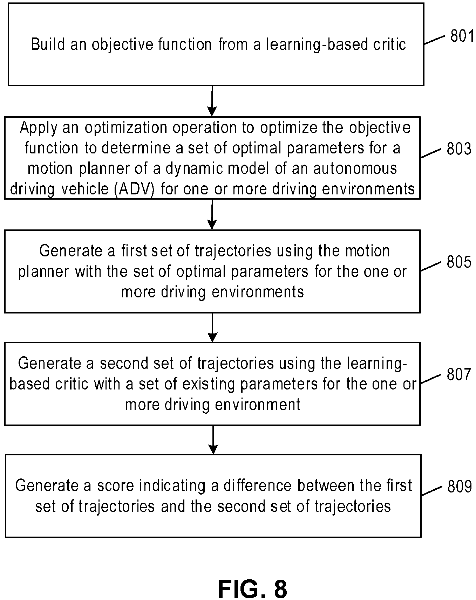

Figure 8 a flow chart illustrating a process of tuning a motion planner of an autonomous driving vehicle (ADV) according to one embodiment. The process may be performed by processing logic which may include software, hardware, or a combination thereof. For example, the process may be performed by various components and services in the autonomous simulation platform described in Figure 6.

Referring to Figure 8, in operation 801, the processing logic building an objective function from a learning-based critic. In operation 803, the processing logic applies an optimization operation to optimize the objective function to determine a set of optimal parameters for a motion planner of a dynamic model of an autonomous driving vehicle (ADV) for one or more driving environments. In operation 805, the processing logic generates a first set of trajectories using the motion planner with the set of optimal parameters for the one or more driving environments. In operation 807, the processing logic generates a second set of trajectories using the learning-based critic with a set of existing parameters for the one or more driving environment. In operation 809, the processing logic generates a score indicating a difference between the first set of trajectories and the second set of trajectories.

Automatic Driving Vehicle

Figure 9 is a block diagram illustrating an autonomous driving vehicle according to one embodiment. Referring to Figure 9, autonomous driving vehicle 901 may be communicatively coupled to one or more servers over a network, which may be any type of networks such as a local area network (LAN), a wide area network (WAN) such as the Internet, a cellular network, a satellite network, or a combination thereof, wired or wireless. The server(s) may be any kind of servers or a cluster of servers, such as Web or cloud servers, application servers, backend servers, or a combination thereof. A server may be a data analytics server, a content server, a traffic information server, a map and point of interest (MPOI) server, or a location server, etc.

An autonomous driving vehicle refers to a vehicle that can be configured to in an autonomous mode in which the vehicle navigates through an environment with little or no input from a driver. Such an autonomous driving vehicle can include a sensor system having one or more sensors that are configured to detect information about the environment in which the vehicle operates. The vehicle and its associated controller(s) use the detected information to navigate through the environment. Autonomous driving vehicle 901 can operate in a manual mode, a full autonomous mode, or a partial autonomous mode.

In one embodiment, autonomous driving vehicle 901 includes, but is not limited to, autonomous driving system (ADS) 910, vehicle control system 911, wireless communication system 912, user interface system 913, and sensor system 915. Autonomous driving vehicle 901 may further include certain common components included in ordinary vehicles, such as, an engine, wheels, steering wheel, transmission, etc., which may be controlled by vehicle control system 911 and/or ADS 910 using a variety of communication signals and/or commands, such as, for example, acceleration signals or commands, deceleration signals or commands, steering signals or commands, braking signals or commands, etc.

Components 910-915 may be communicatively coupled to each other via an interconnect, a bus, a network, or a combination thereof. For example, components 910-519 may be communicatively coupled to each other via a controller area network (CAN) bus. A CAN bus is a vehicle bus standard designed to allow microcontrollers and devices to communicate with each other in applications without a host computer. It is a message-based protocol, designed originally for multiplex electrical wiring within automobiles, but is also used in many other contexts.

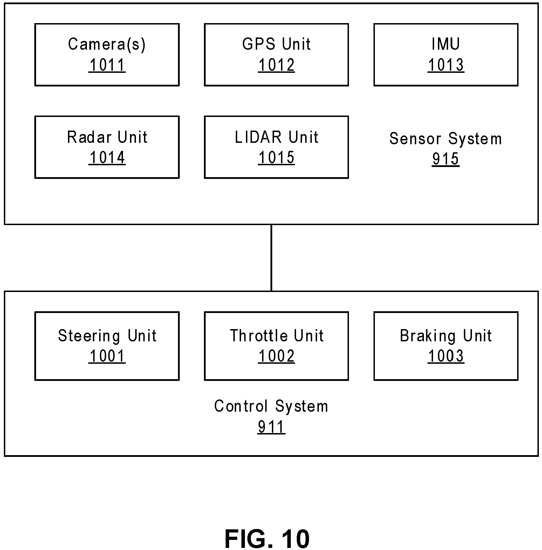

Referring now to Figure 10, in one embodiment, sensor system 915 includes, but it is not limited to, one or more cameras 1011, global positioning system (GPS) unit 1012, inertial measurement unit (IMU) 1013, radar unit 1014, and a light detection and range (LIDAR) unit 1015. GPS system 1012 may include a transceiver operable to provide information regarding the position of the autonomous driving vehicle. IMU unit 1013 may sense position and orientation changes of the autonomous driving vehicle based on inertial acceleration. Radar unit 1014 may represent a system that utilizes radio signals to sense objects within the local environment of the autonomous driving vehicle. In some embodiments, in addition to sensing objects, radar unit 1014 may additionally sense the speed and/or heading of the objects. LIDAR unit 1015 may sense objects in the environment in which the autonomous driving vehicle is located using lasers. LIDAR unit 1015 could include one or more laser sources, a laser scanner, and one or more detectors, among other system components. Cameras 1011 may include one or more devices to capture images of the environment surrounding the autonomous driving vehicle. Cameras 1011 may be still cameras and/or video cameras. A camera may be mechanically movable, for example, by mounting the camera on a rotating and/or tilting a platform.

Sensor system 915 may further include other sensors, such as, a sonar sensor, an infrared sensor, a steering sensor, a throttle sensor, a braking sensor, and an audio sensor (e.g., microphone). An audio sensor may be configured to capture sound from the environment surrounding the autonomous driving vehicle. A steering sensor may be configured to sense the steering angle of a steering wheel, wheels of the vehicle, or a combination thereof. A throttle sensor and a braking sensor sense the throttle position and braking position of the vehicle, respectively. In some situations, a throttle sensor and a braking sensor may be integrated as an integrated throttle/braking sensor.

In one embodiment, vehicle control system 911 includes, but is not limited to, steering unit 1001, throttle unit 1002 (also referred to as an acceleration unit), and braking unit 1003. Steering unit 1001 is to adjust the direction or heading of the vehicle. Throttle unit 1002 is to control the speed of the motor or engine that in turn controls the speed and acceleration of the vehicle. Braking unit 1003 is to decelerate the vehicle by providing friction to slow the wheels or tires of the vehicle. Note that the components as shown in Figure 10 may be implemented in hardware, software, or a combination thereof.

Referring back to Figure 9, wireless communication system 912 is to allow communication between autonomous driving vehicle 901 and external systems, such as devices, sensors, other vehicles, etc. For example, wireless communication system 912 can wirelessly communicate with one or more devices directly or via a communication network. Wireless communication system 912 can use any cellular communication network or a wireless local area network (WLAN), e.g., using WiFi to communicate with another component or system. Wireless communication system 912 could communicate directly with a device (e.g., a mobile device of a passenger, a display device, a speaker within vehicle 901), for example, using an infrared link, Bluetooth, etc. User interface system 913 may be part of peripheral devices implemented within vehicle 901 including, for example, a keyboard, a touch screen display device, a microphone, and a speaker, etc.

Some or all of the functions of autonomous driving vehicle 901 may be controlled or managed by ADS 910, especially when operating in an autonomous driving mode. ADS 910 includes the necessary hardware (e.g., processor(s), memory, storage) and software (e.g., operating system, planning and routing programs) to receive information from sensor system 915, control system 911, wireless communication system 912, and/or user interface system 913, process the received information, plan a route or path from a starting point to a destination point, and then drive vehicle 901 based on the planning and control information. Alternatively, ADS 910 may be integrated with vehicle control system 911.

For example, a user as a passenger may specify a starting location and a destination of a trip, for example, via a user interface. ADS 910 obtains the trip related data. For example, ADS 910 may obtain location and route data from an MPOI server. The location server provides location services and the MPOI server provides map services and the POIs of certain locations. Alternatively, such location and MPOI information may be cached locally in a persistent storage device of ADS 910.

While autonomous driving vehicle 901 is moving along the route, ADS 910 may also obtain real-time traffic information from a traffic information system or server (TIS). Note that the servers may be operated by a third party entity. Alternatively, the functionalities of the servers may be integrated with ADS 910. Based on the real-time traffic information, MPOI information, and location information, as well as real-time local environment data detected or sensed by sensor system 915 (e.g., obstacles, objects, nearby vehicles), ADS 910 can plan an optimal route and drive vehicle 901, for example, via control system 911, according to the planned route to reach the specified destination safely and efficiently.

Figure 11 is a block diagram illustrating an example of the autonomous driving system 910 according to one embodiment. The autonomous driving system 910 may be implemented as a part of autonomous driving vehicle 901 of Figure 9 including, but is not limited to, ADS 910, control system 911, and sensor system 915.

Referring to Figure 11, ADS 910 includes, but is not limited to, localization module 1101, perception module 1102, prediction module 1103, decision module 1104, planning module 1105, control module 1106, routing module 1107, speed planner module 1108. These modules and the modules described in Figure 6 perform similar functions.

Some or all of modules 1101-1108 may be implemented in software, hardware, or a combination thereof. For example, these modules may be installed in persistent storage device 1152, loaded into memory 1151, and executed by one or more processors (not shown). Note that some or all of these modules may be communicatively coupled to or integrated with some or all modules of vehicle control system 911 of Figure 9. Some of modules 1101-1108 may be integrated together as an integrated module.

Localization module 1101 determines a current location of autonomous driving vehicle 901 (e.g., leveraging GPS unit 1012) and manages any data related to a trip or route of a user. Localization module 1101 (also referred to as a map and route module) manages any data related to a trip or route of a user. A user may log in and specify a starting location and a destination of a trip, for example, via a user interface. Localization module 1101 communicates with other components of autonomous driving vehicle 901, such as map and route data 1111, to obtain the trip related data. For example, localization module 1101 may obtain location and route data from a location server and a map and POI (MPOI) server. A location server provides location services and an MPOI server provides map services and the POIs of certain locations, which may be cached as part of map and route data 1111. While autonomous driving vehicle 901 is moving along the route, localization module 1101 may also obtain real-time traffic information from a traffic information system or server.

Based on the sensor data provided by sensor system 915 and localization information obtained by localization module 1101, a perception of the surrounding environment is determined by perception module 1102.

The perception information may represent what an ordinary driver would perceive surrounding a vehicle in which the driver is driving. The perception can include the lane configuration, traffic light signals, a relative position of another vehicle, a pedestrian, a building, crosswalk, or other traffic related signs (e.g., stop signs, yield signs), etc., for example, in a form of an object. The lane configuration includes information describing a lane or lanes, such as, for example, a shape of the lane (e.g., straight or curvature), a width of the lane, how many lanes in a road, one-way or two-way lane, merging or splitting lanes, exiting lane, etc.

Perception module 1102 may include a computer vision system or functionalities of a computer vision system to process and analyze images captured by one or more cameras in order to identify objects and/or features in the environment of autonomous driving vehicle. The objects can include traffic signals, road way boundaries, other vehicles, pedestrians, and/or obstacles, etc. The computer vision system may use an object recognition algorithm, video tracking, and other computer vision techniques. In some embodiments, the computer vision system can map an environment, track objects, and estimate the speed of objects, etc. Perception module 1102 can also detect objects based on other sensors data provided by other sensors such as a radar and/or LIDAR.

For each of the objects, prediction module 1103 predicts what the object will behave under the circumstances. The prediction is performed based on the perception data perceiving the driving environment at the point in time in view of a set of map/rout information 1111 and traffic rules 1112. For example, if the object is a vehicle at an opposing direction and the current driving environment includes an intersection, prediction module 1103 will predict whether the vehicle will likely move straight forward or make a turn. If the perception data indicates that the intersection has no traffic light, prediction module 1103 may predict that the vehicle may have to fully stop prior to enter the intersection. If the perception data indicates that the vehicle is currently at a left-turn only lane or a right-turn only lane, prediction module 1103 may predict that the vehicle will more likely make a left turn or right turn respectively.

For each of the objects, decision module 1104 makes a decision regarding how to handle the object. For example, for a particular object (e.g., another vehicle in a crossing route) as well as its metadata describing the object (e.g., a speed, direction, turning angle), decision module 1104 decides how to encounter the object (e.g., overtake, yield, stop, pass). Decision module 1104 may make such decisions according to a set of rules such as traffic rules or driving rules 1112, which may be stored in persistent storage device 1152.

Routing module 1107 is configured to provide one or more routes or paths from a starting point to a destination point. For a given trip from a start location to a destination location, for example, received from a user, routing module 1107 obtains route and map information 1111 and determines all possible routes or paths from the starting location to reach the destination location. Routing module 1107 may generate a reference line in a form of a topographic map for each of the routes it determines from the starting location to reach the destination location. A reference line refers to an ideal route or path without any interference from others such as other vehicles, obstacles, or traffic condition. That is, if there is no other vehicle, pedestrians, or obstacles on the road, an ADV should exactly or closely follows the reference line. The topographic maps are then provided to decision module 1104 and/or planning module 1105. Decision module 1104 and/or planning module 1105 examine all of the possible routes to select and modify one of the most optimal routes in view of other data provided by other modules such as traffic conditions from localization module 1101, driving environment perceived by perception module 1102, and traffic condition predicted by prediction module 1103. The actual path or route for controlling the ADV may be close to or different from the reference line provided by routing module 1107 dependent upon the specific driving environment at the point in time.

Based on a decision for each of the objects perceived, planning module 1105 plans a path or route for the autonomous driving vehicle, as well as driving parameters (e.g., distance, speed, and/or turning angle), using a reference line provided by routing module 1107 as a basis. That is, for a given object, decision module 1104 decides what to do with the object, while planning module 1105 determines how to do it. For example, for a given object, decision module 1104 may decide to pass the object, while planning module 1105 may determine whether to pass on the left side or right side of the object. Planning and control data is generated by planning module 1105 including information describing how vehicle 1101 would move in a next moving cycle (e.g., next route/path segment). For example, the planning and control data may instruct vehicle 912 to move 10 meters at a speed of 30 miles per hour (mph), then change to a right lane at the speed of 25 mph.

Speed planner 1108 can be part of planning module 1105 or a separate module. Given a planned trajectory, speed planner 1108 guides the ADV to traverse along the planned path with a sequence of proper speeds $v = [v_i, ...], i \in [0, N]$, where $v_i = ds_i/dt$ and $ds_i$ is the traverse distance along the path at $t = i$ and $dt$ is the sampling time.

Based on the planning and control data, control module 1106 controls and drives the autonomous driving vehicle, by sending proper commands or signals to vehicle control system 911, according to a route or path defined by the planning and control data. The planning and control data include sufficient information to drive the vehicle from a first point to a second point of a route or path using appropriate vehicle settings or driving parameters (e.g., throttle, braking, steering commands) at different points in time along the path or route.

In one embodiment, the planning phase is performed in a number of planning cycles, also referred to as driving cycles, such as, for example, in every time interval of 100 milliseconds (ms). For each of the planning cycles or driving cycles, one or more control commands will be issued based on the planning and control data. That is, for every 100 ms, planning module 1105 plans a next route segment or path segment, for example, including a target position and the time required for the ADV to reach the target position. Alternatively, planning module 1105 may further specify the specific speed, direction, and/or steering angle, etc. In one embodiment, planning module 1105 plans a route segment or path segment for the next predetermined period of time such as 5 seconds. For each planning cycle, planning module 1105 plans a target position for the current cycle (e.g., next 5 seconds) based on a target position planned in a previous cycle. Control module 1106 then generates one or more control commands (e.g., throttle, brake, steering control commands) based on the planning and control data of the current cycle.

Note that decision module 1104 and planning module 1105 may be integrated as an integrated module. Decision module 1104/planning module 1105 may include a navigation system or functionalities of a navigation system to determine a driving path for the autonomous driving vehicle. For example, the navigation system may determine a series of speeds and directional headings to affect movement of the autonomous driving vehicle along a path that substantially avoids perceived obstacles while generally advancing the autonomous driving vehicle along a roadway-based path leading to an ultimate destination. The destination may be set according to user inputs via user interface system 913. The navigation system may update the driving path dynamically while the autonomous driving vehicle is in operation. The navigation system can incorporate data from a GPS system and one or more maps so as to determine the driving path for the autonomous driving vehicle.

According to one embodiment, a system architecture of an autonomous driving system as described above includes, but it is not limited to, an application layer, a planning and control (PNC) layer, a perception layer, a device driver layer, a firmware layer, and a hardware layer. The application layer may include user interface or configuration application that interacts with users or passengers of an autonomous driving vehicle, such as, for example, functionalities associated with user interface system 913. The PNC layer may include functionalities of at least planning module 1105 and control module 1106. The perception layer may include functionalities of at least perception module 1102. In one embodiment, there is an additional layer including the functionalities of prediction module 1103 and/or decision module 1104. Alternatively, such functionalities may be included in the PNC layer and/or the perception layer. The firmware layer may represent at least the functionality of sensor system 915, which may be implemented in a form of a field programmable gate array (FPGA). The hardware layer may represent the hardware of the autonomous driving vehicle such as control system 911. The application layer, PNC layer, and perception layer can communicate with the firmware layer and hardware layer via the device driver layer.

Note that some or all of the components as shown and described above may be implemented in software, hardware, or a combination thereof. For example, such components can be implemented as software installed and stored in a persistent storage device, which can be loaded and executed in a memory by a processor (not shown) to carry out the processes or operations described throughout this application. Alternatively, such components can be implemented as executable code programmed or embedded into dedicated hardware such as an integrated circuit (e.g., an application specific IC or ASIC), a digital signal processor (DSP), or a field programmable gate array (FPGA), which can be accessed via a corresponding driver and/or operating system from an application. Furthermore, such components can be implemented as specific hardware logic in a processor or processor core as part of an instruction set accessible by a software component via one or more specific instructions.

Some portions of the preceding detailed descriptions have been presented in terms of algorithms and symbolic representations of operations on data bits within a computer memory. These algorithmic descriptions and representations are the ways used by those skilled in the data processing arts to most effectively convey the substance of their work to others skilled in the art. An algorithm is here, and generally, conceived to be a self-consistent sequence of operations leading to a desired result. The operations are those requiring physical manipulations of physical quantities.

It should be borne in mind, however, that all of these and similar terms are to be associated with the appropriate physical quantities and are merely convenient labels applied to these quantities. Unless specifically stated otherwise as apparent from the above discussion, it is appreciated that throughout the description, discussions utilizing terms such as those set forth in the claims below, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Embodiments of the disclosure also relate to an apparatus for performing the operations herein. Such a computer program is stored in a non-transitory computer readable medium. A machine-readable medium includes any mechanism for storing information in a form readable by a machine (e.g., a computer). For example, a machine-readable (e.g., computer-readable) medium includes a machine (e.g., a computer) readable storage medium (e.g., read only memory ("ROM"), random access memory ("RAM"), magnetic disk storage media, optical storage media, flash memory devices).

The processes or methods depicted in the preceding figures may be performed by processing logic that comprises hardware (e.g. circuitry, dedicated logic, etc.), software (e.g., embodied on a non-transitory computer readable medium), or a combination of both. Although the processes or methods are described above in terms of some sequential operations, it should be appreciated that some of the operations described may be performed in a different order. Moreover, some operations may be performed in parallel rather than sequentially.

Embodiments of the present disclosure are not described with reference to any particular programming language. It will be appreciated that a variety of programming languages may be used to implement the teachings of embodiments of the disclosure as described herein.

In the foregoing specification, embodiments of the disclosure have been described with reference to specific embodiments thereof. It will be evident that various modifications may be made thereto without departing from the broader spirit and scope of the disclosure as set forth in the following claims. The specification and drawings are, accordingly, to be regarded in an illustrative sense rather than a restrictive sense.

## Claims

1. A computer-implemented method of training a learning-based critic for tuning a motion planner of an autonomous driving vehicle (ADV), the method comprising:

    receiving, by an automatic driving simulation platform, training data that incudes human driving trajectories and random trajectories derived from the human driving trajectories;
    training, by the automatic driving simulation platform, a learning-based critic using the training data;
    identifying, by the learning-based critic running at the automatic driving simulation platform, a set of discrepant trajectories by comparing a first set of trajectories, and a second set of trajectories, wherein the first set trajectories are generated by a motion planner with a first set of parameters, and the second set of trajectories are generated by the motion planner with a second of parameters; and
    refining, by the neural network training platform, the learning-based critic based on the set of discrepant trajectories.

2. The method of claim 1, wherein the first set of parameters of the motion planner are identified by the learning-based critic for one or more driving environments, and the second set of parameters are a set of existing parameters for the motion planner.

3. The method of claim 1 or 2, wherein each of the random trajectories is derived from one of the human driving trajectories, and wherein the deriving of the random trajectory from the corresponding human driving trajectory comprises:

    determining a starting point and an ending point of corresponding human driving trajectory;
    varying one of one or more parameters of the corresponding human driving trajectory; and
    replacing a corresponding parameter of the human driving trajectory with the varied parameter to get the random trajectory.

4. The method of claim 3, wherein the parameter is varied by giving the parameter a different value selected from a predetermined range.

5. The method of any of claims 1-4, wherein the learning-based critic includes an encoder and a similarity network, wherein each of the encoder and the similarity network is a neural network model.

6. The method of claim 5, wherein each of the encoder and the similarity network is one of a recurrent neural network (RNN) or multi-layer perceptron (MLP) network.

7. The method of claim 6, wherein the encoder is a RNN network, with each RNN cell being a gated recurrent unit (GRU).

8. The method of claim 5, wherein features extracted the training data include speed features, path features, and obstacle features, wherein each feature is associated with a goal feature, wherein the goal feature is a map scenario related feature.

9. The method of claim 8, wherein the trained encoder is trained using the human driving trajectories, encodes speed features, path features, obstacle features, and associated goal features, and generates an embedding with trajectories that are different from the human driving trajectories.

10. The method of claim 8, wherein the similarity network is trained using the human driving trajectories and the random trajectories, and is to generate a score reflecting a difference between a trajectory generated by the motion planner and a corresponding trajectory from the embedding.

11. The method of any of claims 1-10, wherein the learning-based critic is trained using a loss function with an element for measuring similarity between trajectories.

12. The method of any of claims 1-11, further comprising:

building an objective function from the learning-based critic;
applying an optimization operation to optimize the objective function to determine a set of optimal parameters for a motion planner of a dynamic model of an autonomous driving vehicle (ADV) for one or more driving environments;
generating a first set of trajectories using the motion planner with the set of optimal parameters for the one or more driving environments;
generating a second set of trajectories using the learning-based critic with a set of existing parameters for the one or more driving environment;
generating a score indicating a difference between the first set of trajectories and the second set of trajectories.

13. The method of claim 12, further comprising: performing the identifying and the refining in a closed loop until the score reaches a predetermined threshold.

14. A non-transitory machine-readable medium having instructions stored therein, which when executed by a processor, cause the processor to perform operations of the method of any of claims 1-13.

15. An automatic driving simulation platform, which is configured to perform the method of any of claims 1-13.

100

| Data 103 | Training 105 | Tuning 107 | Evaluation 109 |

**Data 103**

Expert Trajectories
111

AT-sampler
113

Random Trajectories
115

**Training 105**

Feature Extractor
117

Learning-based Critic
119

**Tuning 107**

Bayesian Optimization
121

Metrics Evaluation
123

Discrepant Trajectories
125

**Evaluation 109**

Default Trajectories
127

Metrics Evaluation
129

Tuned Trajectories
131

FIG. 1

FIG. 2A       FIG. 2B       FIG. 2C

Table I

FEATURES FOR LEARNING-BASED CRITIC.

| Input Features | Dimensions |
|---|---|
| 301 $\text{fea}_s$ | $v,\ a,\ j$ |
| 303 $\text{fea}_p$ | $v_{\text{limit}},\ \alpha,\ \kappa$ |
| 305 $\text{fea}_o$ | $o_{\text{type}},\ \hat{s},\ \hat{l},\ \hat{v}_s,\ \hat{a}_s,\ \hat{v}_l,\ \hat{a}_l,\ d_o$ |

FIG. 3

$$\mathcal{L}_{\text{critic}} = \sum_{\tau^* \in \mathcal{D}^*} f_{\text{critic},\varphi}(\tau^*) \qquad (4a)$$

$$+ \sum_{\tau^* \in \mathcal{D}^*} \sum_{\tau \in \mathcal{D}} \|f_{\text{critic},\varphi}(\tau) - \text{sim}(\tau, \tau^*)\| \qquad (4b)$$

**FIG. 4A**

**FIG. 4B**

**FIG. 4C**

FIG. 5A

FIG. 5B

FIG. 6

Receive, by an automatic driving simulation platform, training data that incudes human driving trajectories and random trajectories derived from the human driving trajectories — 701

Train, by the automatic driving simulation platform, a learning-based critic using the training data — 703

Identify, by the learning-based critic running at the automatic driving simulation platform, a set of discrepant trajectories by comparing a first set of trajectories, and a second set of trajectories, wherein the first set trajectories are generated by a motion planner with a first set of parameters, and the second set of trajectories are generated by the motion planner with a second of parameters — 705

Refine, by the neural network training platform, the learning-based critic based on the set of discrepant trajectories. — 707

## FIG. 7

Build an objective function from a learning-based critic — 801

Apply an optimization operation to optimize the objective function to determine a set of optimal parameters for a motion planner of a dynamic model of an autonomous driving vehicle (ADV) for one or more driving environments — 803

Generate a first set of trajectories using the motion planner with the set of optimal parameters for the one or more driving environments — 805

Generate a second set of trajectories using the learning-based critic with a set of existing parameters for the one or more driving environment — 807

Generate a score indicating a difference between the first set of trajectories and the second set of trajectories — 809

**FIG. 8**

Sensor System
915

Control System
911

Wireless Communication System
912

User Interface System
913

Autonomous Driving System
910

Autonomous Driving Vehicle
901

## FIG. 9

| Camera(s) 1011 | GPS Unit 1012 | IMU 1013 |
|---|---|---|
| Radar Unit 1014 | LIDAR Unit 1015 | Sensor System 915 |

| Steering Unit 1001 | Throttle Unit 1002 | Braking Unit 1003 |
|---|---|---|

Control System
911

# FIG. 10

| Localization Module 1101 | Perception Module 1102 | Prediction Module 1103 |
| Decision Module 1104 | Planning Module 1105 | Control Module 1106 |
| Memory 1151 | Speed Planner 1108 | Routing Module 1107 |

Sensor System 915

| Map and Route Data 1111 | Driving/Traffic Rules 1112 |

Persistent Storage Device 1152

Autonomous Driving System (ADS) 910

Control System 911

FIG. 11